# EUROPEAN PATENT APPLICATION

(11) **EP 4 700 911 A1**
(43) Date of publication of application: **25.02.2026**
(21) Application number: 25177193.7
(22) Date of filing: 19.05.2025
(51) Int. Cl.: H01M 10/613, H01M 10/6556, H01M 10/6568, H01M 50/293, H01M 50/30, H01M 50/358, F28D 1/03, F28F 3/12, H01M 10/623, H01M 10/653, H01M 10/6554, H01M 10/6555, B60L 58/26, H01M 50/209, H01M 10/6553, H01M 10/6557, H01M 50/242, H01M 50/244, H01M 50/35, H01M 50/507

(54) **BATTERY PACK AND ASSEMBLY METHOD THEREOF**

(30) Priority: 22.08.2024 CN 202411162171
(71) Applicant: Eve Energy Co., Ltd., Huizhou, Guangdong 516006 (CN)
(72) Inventor: WU, Xiaojuan, Huizhou, Guangdong, 516006 (CN); FENG, Yanqiang, Huizhou, Guangdong, 516006 (CN); OU, Caixia, Huizhou, Guangdong, 516006 (CN)
(74) Representative: Herrero & Asociados, S.L.

(57) **Abstract**

The present disclosure provides a battery pack and an assembly method thereof. The battery pack includes a housing, a liquid cooling plate, a thermally conductive fixation layer and a plurality of battery cells. The plurality of battery cells is arranged in an array within the housing. The liquid cooling plate covers the housing. The thermally conductive fixation layer fills and cures in the gaps between the battery cells and the housing. The thermally conductive fixation layer is further sandwiched between a shoulder portion of the battery cell and the liquid cooling plate and encapsulates terminal posts of the battery cell. An avoidance channel is formed in the thermally conductive fixation layer. The avoidance channel is aligned with the explosion-proof valve of the battery cell.

## Description

### TECHNICAL FIELD

The present disclosure relates to the field of battery technologies, and more particularly, to a battery pack and an assembly method thereof.

### BACKGROUND

Battery packs are an essential component of new energy technologies, providing energy and power for electrical devices. Currently, battery packs on the market are generally formed by connecting multiple battery cells in series and/or in parallel, and are equipped with cell monitoring and thermal management devices.

### SUMMARY

In the assembly of related battery packs, large-area liquid cooling or bottom liquid cooling solutions are commonly adopted. However, when the ratio of the battery cell height H to the thickness T is greater than or equal to 5, the bottom liquid cooling solution fails to satisfy the overall cooling performance of the cell module, resulting in excessive temperature differences along the height direction of the battery cells. This leads to uneven current density during charge and discharge processes, thereby affecting the normal operation of the battery system. Meanwhile, during the fast-charging process, a large amount of heat is generated at the welding joint between the cell terminal post and the internal tab, which significantly affects the service life of the tab.

Therefore, there is an urgent need for a battery pack and an assembly method thereof to address the above-mentioned issues.

According to a first aspect, the present disclosure provides a battery pack, including:
- a housing;
- a plurality of battery cells, which are arranged in an array within the housing;
- a liquid cooling plate covering the housing; and
- a thermally conductive fixation layer, which is filled and cured in the gaps between the battery cells and the housing, the thermally conductive fixation layer is also sandwiched between the shoulder portion of the battery cells and the liquid cooling plate, and encapsulates the terminal posts of the battery cells, the thermally conductive fixation layer is provided with an avoidance channel, which is aligned with the explosion-proof valve of the battery cell.

According to a second aspect, the present disclosure provides an assembly method for a battery pack, which is configured to assemble the battery pack as described above, including the steps of:
S1. Providing a housing and a plurality of battery cells to be assembled, arranging the plurality of battery cells in an array, and filling structural adhesive in the gaps between adjacent battery cells, gaps between the bottom of the housing and the battery cells, and gaps between the sidewalls of the housing and the battery cells, so as to form a first fixation layer;
S2. Applying the structural adhesive to the top of the plurality of battery cells, such that the structural adhesive encapsulates the terminal posts of the battery cells and extends to the lateral edges of the shoulder portions of the battery cells, thereby forming a second fixation layer, the second fixation layer being connected to the first fixation layer to form the thermally conductive fixation layer;
S3. Mounting the liquid cooling plate, so that the second fixation layer is cured and sandwiched between the shoulder portions of the battery cells and the liquid cooling plate.

The beneficial effects provided by the present disclosure are as follows: In the battery pack provided by the present disclosure, a plurality of battery cells are directly fixed within the housing by means of the thermally conductive fixation layer, which effectively improves a pack assembly efficiency of the battery pack. The thermally conductive fixation layer can also transfer heat from the side surfaces of the battery cells to the housing, which is beneficial to improving the cooling performance of the battery cells and ensuring temperature uniformity. Meanwhile, the thermally conductive fixation layer is interposed between the shoulder portion of the battery cell and the liquid cooling plate. The thermally conductive fixation layer not only provides support and fixation between the shoulder portion of the battery cell and the liquid cooling plate, but also enables heat transfer, thereby effectively enhancing the heat transfer efficiency of the battery cells. Optionally, the thermally conductive fixation layer further encapsulates the terminal posts of the battery cells. Since the terminals are directly connected with the internal tabs of the battery cells, heat generated at the welding joints between the tabs and the terminals during operation of the battery pack can be directly transferred to the liquid cooling plate via the thermally conductive fixation layer and dissipated by the liquid cooling plate, thereby ensuring the battery pack has high operational safety and long service life. In addition, the thermally conductive fixation layer is provided with an avoidance channel, which is aligned with the explosion-proof valve of the battery cell, so as to ensure the safety of the battery cell during operation.

### BRIEF DESCRIPTION OF THE DRAWINGS

FIG. 1 is a first schematic structural diagram of the battery pack provided in an embodiment of the present disclosure;
FIG. 2 is a second schematic structural diagram of the battery pack provided in an embodiment of the present disclosure.

In the drawings:
1. Housing; 2. Battery cell assembly;21. Battery cell; 211. Expansion surface; 22. Foam layer; 3. Thermally conductive fixation layer; 4. Liquid cooling plate.

### DETAILED DESCRIPTION

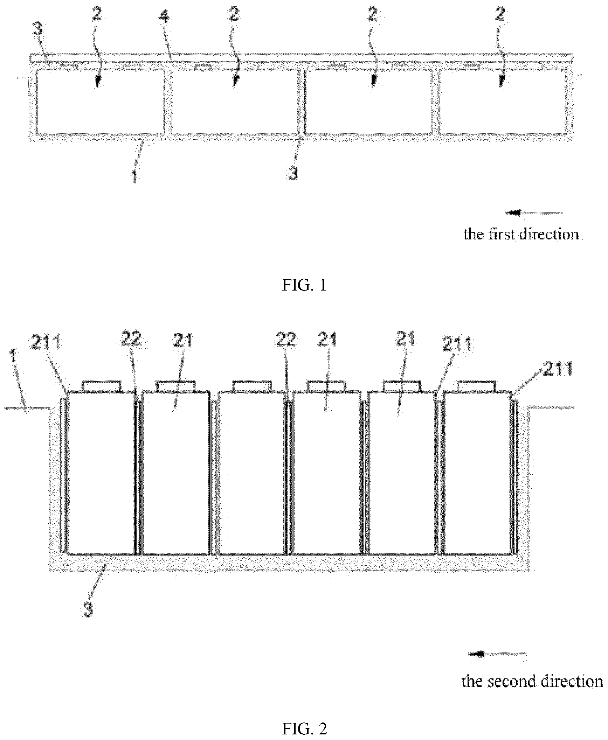

This embodiment provides a battery pack with a simple manufacturing process, high structural strength, and good cycling performance. As shown in FIG. 1 and FIG. 2, the battery pack includes a housing 1, a thermally conductive fixation layer 3, a liquid cooling plate 4, and a plurality of battery cell assemblies 2.

Specifically, the plurality of battery cell assemblies 2 are arranged at intervals along a first direction inside the housing 1. Each battery cell assembly 2 includes a plurality of battery cells 21 arranged at intervals along a second direction. The second direction is perpendicular to an expansion surface 211 of the battery cell 21, and the first direction is perpendicular to the second direction. The battery cell assembly 2 further includes a foam layer 22, which is disposed in contact with and sandwiched between the expansion surfaces 211 of any two adjacent battery cells 21. The expansion surfaces 211 of the two battery cells 21 located at the ends along the second direction are also provided with foam layers 22. It can be understood that the foam layer 22 can buffer the expansion of the battery cell 21. At the same time, since the foam layer 22 functions throughout the entire life cycle of the battery cell 21, it effectively ensures the cycling performance of the battery cell 21, and reduces processes such as blue film sticking and window opening, thereby saving time and labor during manufacturing.

In this embodiment, the foam layer 22 includes a first PP layer, an XPP layer, and a second PP layer sequentially stacked. The first PP layer and second PP layer are polypropylene layers, which have a certain hardness and strength, facilitating uniform stress distribution on the expansion surface 211 of the battery cell 21. At the same time, the polypropylene layers have good insulation properties, which improves the safety of the battery cell assembly 2. The XPP layer is made of expanded polypropylene, which has excellent compressive and heat absorption properties.

Further, the XPP layer is thicker than the first and second PP layers, so as to better absorb the expansion of the battery cell 21 and ensure its safe operation.

Continuing with reference to FIG. 1 and FIG. 2, in this embodiment, after placing the plurality of battery cell assemblies 2 into the housing 1, the thermally conductive fixation layer 3 is filled and cured in gaps between the battery cell assemblies 2, and gaps between the housing 1 and the battery cell assemblies 2. That is, the battery cell assemblies 2 are directly fixed inside the housing 1 via the thermally conductive fixation layer 3, thus eliminating the need for components such as battery cell brackets, effectively improving the grouping rate of the battery pack, and reducing the overall weight, which helps realize the goal of lightweight design. Furthermore, the thermally conductive fixation layer 3 can transfer the heat from the side surfaces of the battery cells 21 to the housing 1, thereby improving the cooling effect and ensuring temperature consistency.

In this embodiment, the liquid cooling plate 4 is provided on top of the housing 1 and located above the battery cells 21. The thermally conductive fixation layer 3 is also sandwiched between shoulder portions of the battery cell 21 and the liquid cooling plate 4. The thermally conductive fixation layer 3 not only provides support and fixation between the shoulder portions of the battery cell 21 and the liquid cooling plate 4, but also enables heat transfer, thereby effectively improving the heat transfer efficiency of the battery cell 21.

Optionally, the thermally conductive fixation layer 3 also encapsulates the terminal posts of the battery cell 21. Since the terminal posts are directly connected to internal tabs of the battery cell 21, during operation of the battery cell, the heat generated at the welding joint between the tab and the terminal post can be directly transferred to the liquid cooling plate 4 via the thermally conductive fixation layer 3, and further transferred away by the liquid cooling plate 4, thus providing high safety and long service life for the battery pack. Moreover, the thermally conductive fixation layer 3 encapsulates the terminal posts of the battery cell 21, which can restrain expansion of the battery cell 21 in the height direction and isolate the terminal posts from the housing 1, thus reducing condensation-related safety issues and enhancing safety of the battery pack.

Optionally, the battery pack further includes a CCS assembly, which is located above the battery cell 21 and connected to the positive and negative terminal posts of the battery cell 21. The CCS assembly enables series and/or parallel connection of the plurality of battery cells 21 and transmits voltage and current. Preferably, the CCS assembly is welded to the positive or negative terminal posts.

Optionally, as shown in FIG. 1 and FIG. 2, the positive and negative terminal posts of the battery cell 21 are located at the top of the battery cell 21, and the explosion-proof valve of the battery cell 21 is located between the positive and negative terminal posts. The thermally conductive fixation layer 3 encapsulates the positive and negative terminal posts respectively and extends in the direction away from the explosion-proof valve to the lateral edge of the shoulder portion of the battery cell, connecting to the thermally conductive fixation layer 3 of the shoulder portion of the adjacent battery cells or connecting to the thermally conductive fixation layer 3 between the battery cell 21 and the housing 1. An avoidance channel is formed between the thermally conductive fixation layers 3 on both sides of the explosion-proof valve to ensure safety of the battery cell 21 during operation.

Optionally, the thermally conductive fixation layer 3 is a structural adhesive cured layer. Specifically, the structural adhesive cured layer can be formed by curing of a conventional structural adhesive used in related technologies, so as to enhance the overall structural strength of the battery pack; the structural adhesive cured layer can also be formed by curing of a thermally conductive structural adhesive to improve heat dissipation.

In this embodiment, the thermally conductive fixation layer 3 is formed by two adhesive application and curing processes. Specifically, after adhering the foam to the expansion surface 211 of the battery cell 21 and connecting a plurality of battery cells 21 to form the battery cell assembly 2, the battery cell assemblies 2 are placed into the housing 1. Then, structural adhesive is injected into gaps between adjacent battery cell assemblies 2, as well as gaps between the battery cell assemblies 2 and the side and bottom walls of the housing 1, respectively. After the structural adhesive is cured, a first fixation layer is formed. This constitutes the first round of adhesive application and curing. The first fixation layer is configured to fix the plurality of battery cell assemblies 2 inside the housing 1. Next, the CCS assembly is welded, and then, using an adhesive dispensing device, structural adhesive is applied over the terminal posts of the battery cell 21 and extended to the lateral edge of the shoulder portions of the battery cell 21, forming a second fixation layer, which connects with the first fixation layer. After curing, this forms the thermally conductive fixation layer 3 of this embodiment. Specifically, the adhesive dispensing device is a conventional technology, and its adhesive dispensing method and operation will not be further described herein.

It can be understood that in this embodiment, the liquid cooling plate 4 is provided above the battery cell 21 and is fixed to the side of the CCS assembly that faces away from the battery cell 21 via structural adhesive, facilitating heat dissipation for both the battery cell 21 and the CCS assembly. In another embodiment, the liquid cooling plate 4 may also be provided at the bottom of the battery cell 21, directly attached to bottom surface of the battery cell 21, or spaced apart from the bottom surface of the battery cell 21, with thermally conductive structural adhesive filled between the liquid cooling plate 4 and the bottom surface of the battery cell 21, achieving the heat dissipation effect to the battery cell 21. In yet another embodiment, the liquid cooling plate 4 can also be provided between two adjacent battery cell assemblies 2, or between the side of the battery cell assembly 2 at the end along the first direction and the inner wall of the housing 1, and fixed by the thermally conductive fixation layer 3, which also achieves cooling for the battery cell 21.

This embodiment also provides an assembly method for a battery pack, which is configured to assemble the battery pack as described above, including the following steps:
S1. Providing the housing 1 and a plurality of battery cells 21 to be assembled. Arranging the battery cells 21 in an array and fill the gaps between adjacent battery cells 21, between the bottom of the housing 1 and the battery cells 21, and between the sidewalls of the housing 1 and the battery cells 21 with structural adhesive to form the first fixation layer.
S2. Applying structural adhesive to the tops of the plurality of battery cells 21, so that the adhesive covers the terminal posts of the battery cells 21 and extends to the lateral edges of the battery cell shoulder portions, forming a second fixation layer. The second fixation layer connects with the first fixation layer to form the thermally conductive fixation layer 3.
S3. Mounting the liquid cooling plate 4, allowing the second fixation layer to cure and be sandwiched between the shoulder portion of the battery cell 21 and the liquid cooling plate 4, thereby completing the assembly of the aforementioned battery pack.

Optionally, step S1 specifically includes:
S101. Arranging the plurality of battery cells 21 in a row along the second direction, the second direction being perpendicular to the expansion surface of the battery cell 21.
S102. Attaching a foam layer 22 between the expansion surfaces 211 of adjacent battery cells 21, and also on the expansion surfaces 211 of the end battery cells 21, to form the battery cell assembly 2.
S103. Sequentially placing the plurality of battery cell assemblies 2 at intervals along the first direction in the housing 1, the first direction being perpendicular to the second direction.

## Claims

1. A battery pack, comprising:
a housing (1);
a plurality of battery cells (21), the plurality of battery cells (21) being arranged in an array within the housing (1);
a liquid cooling plate (4), covering the housing (1);
a thermally conductive fixation layer (3), filled and cured in gaps between the battery cells (21) and the housing (1), the thermally conductive fixation layer (3) is further sandwiched between a shoulder portion of the battery cell (21) and the liquid cooling plate (4), and the thermally conductive fixation layer (3) encapsulates terminal posts of the battery cells (21), wherein an avoidance channel is formed in the thermally conductive fixation layer (3), the avoidance channel is aligned with the explosion-proof valve of the battery cell (21).

2. The battery pack according to claim 1, wherein the plurality of battery cells (21) are arranged at intervals along a second direction to form a battery cell assembly (2), the second direction being perpendicular to an expansion surface (211) of the battery cell (21), the battery cell assembly (2) further comprises a foam layer (22), the foam layer (22) is attached and sandwiched between the expansion surfaces (211) of any two adjacent battery cells (21), and the two expansion surfaces (211) at the ends of the battery cell (21) in the second direction are provided with the foam layer (22) attached thereto.

3. The battery pack according to claim 2, wherein the battery pack is provided with a plurality of battery cell assemblies (2), and the plurality of battery cell assemblies (2) are arranged at intervals within the housing (1) along a first direction, the first direction being perpendicular to the second direction.

4. The battery pack according to claim 2, wherein the foam layer (22) comprises a first PP layer, an XPP layer, and a second PP layer, which are sequentially laminated.

5. The battery pack according to claim 4, wherein a thickness of the XPP layer is greater than a thickness of the first PP layer, and the thickness of the XPP layer is greater than a thickness of the second PP layer.

6. The battery pack according to any one of claims 1-5, wherein a positive terminal post and a negative terminal post of the battery cell (21) are located at top of the battery cell (21), the explosion-proof valve of the battery cell (21) is located between the positive terminal post and the negative terminal post, the thermally conductive fixation layer (3) respectively encapsulates the positive terminal post and the negative terminal post, and extends in a direction away from the explosion-proof valve to lateral edge of the shoulder portion of the battery cell (21), and is connected with the thermally conductive fixation layer (3) of the shoulder portions of two adjacent battery cells (21) or with the thermally conductive fixation layer (3) between the battery cell (21) and the housing (1), the avoidance channel is formed between the portions of the thermally conductive fixation layer (3) located on both sides of the explosion-proof valve.

7. The battery pack according to any one of claims 1-5, wherein the thermally conductive fixation layer (3) is a structural adhesive cured layer.

8. The battery pack according to any one of claims 1-5, wherein the battery pack further comprises a CCS assembly, the CCS assembly is located above the battery cell (21), the CCS assembly is configured to be connected to the positive terminal post and the negative terminal post of the battery cell (21) before the thermally conductive fixation layer (3) encapsulates the terminal post of the battery cell (21).

9. The battery pack according to claim 5, wherein the first PP layer and second PP layer are polypropylene layers, and the XPP layer is made of expanded polypropylene.

10. The battery pack according to claim 8, wherein the liquid cooling plate (4) is provided above the battery cell (21) and is fixed to the side of the CCS assembly facing away from the battery cell (21) via structural adhesive.

11. The battery pack according to claim 1, wherein the liquid cooling plate (4) is provided at the bottom of the battery cell (21) with thermally conductive structural adhesive filled between the liquid cooling plate (4) and the bottom surface of the battery cell (21)

12. The battery pack according to claim 3, wherein the liquid cooling plate (4) is provided between two adjacent battery cell assemblies (2) and is fixed by the thermally conductive fixation layer (3).

13. The battery pack according to claim 3, wherein the liquid cooling plate (4) is provided between the end side of the cell assembly (2) along the first direction and the inner wall of the housing (1) and is fixed by the thermally conductive fixation layer (3).

14. An assembly method for a battery pack, configured to assemble the battery pack according to any one of claims 1-13, the assembly method comprising the steps of:
S1, providing a housing (1) and a plurality of battery cells (21) to be assembled, arranging the plurality of battery cells (21) in an array, filling structural adhesive in the gaps between two adjacent battery cells (21), between a bottom of the housing (1) and the battery cells (21), and between sidewalls of the housing (1) and the battery cells (21), to form a first fixation layer;
S2, applying the structural adhesive to the top of the plurality of battery cells (21), so that the structural adhesive encapsulates the terminal posts of the battery cells (21), and extends to the lateral edge of the shoulder portion of the battery cell (21), forming a second fixation layer, the second fixation layer being connected with the first fixation layer to form the thermally conductive fixation layer (3);
S3, mounting the liquid cooling plate (4), so that the second fixation layer is cured and sandwiched between the shoulder portion of the battery cell (21) and the liquid cooling plate (4).

15. The assembly method for a battery pack according to claim 14, wherein the battery pack further comprises a foam layer (22), and step S1 specifically comprises:
S101, arranging the plurality of battery cells (21) in a row along the second direction, the second direction being perpendicular to the expansion surface of the battery cell (21);
S102, attaching the foam layer (22) between the expansion surfaces (211) of two adjacent battery cells (21), and attaching the foam layer (22) on the expansion surfaces (211) of the two battery cells (21) located at the ends, to form a battery cell assembly (2);
S103, sequentially placing the plurality of battery cell assemblies (2) at intervals within the housing (1) along the first direction, the first direction being perpendicular to the second direction.
